(19) Europäisches Patentamt / European Patent Office / Office européen des brevets

(11) **EP 3 872 982 B1**

(12) **EUROPEAN PATENT SPECIFICATION**

(45) Date of publication and mention of the grant of the patent:
**13.05.2026 Bulletin 2026/20**

(21) Application number: **20160014.5**

(22) Date of filing: **28.02.2020**

(51) International Patent Classification (IPC):
$H02P\ 23/02$ (2006.01)　　　$H02P\ 23/00$ (2016.01)
$H02P\ 6/182$ (2016.01)

(52) Cooperative Patent Classification (CPC):
**H02P 23/02; H02P 6/182; H02P 23/0004; H02P 23/0027**

(54) **CONTROL UNIT AND CONTROL METHOD FOR CONTROLLING A MOTOR**

STEUEREINHEIT UND STEUERVERFAHREN ZUR STEUERUNG EINES MOTORS

UNITÉ DE COMMANDE ET PROCÉDÉ DE COMMANDE POUR UN MOTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.09.2021 Bulletin 2021/35**

(73) Proprietor: **Motor Competence Center Holding Flensburg GmbH**
**24941 Flensburg (DE)**

(72) Inventor: **PEDERSEN, Niels**
**6270 Tønder (DK)**

(74) Representative: **Inspicos P/S**
**Strandvejen 60**
**2900 Hellerup (DK)**

(56) References cited:
US-A- 5 592 058　　　US-A- 6 034 494
US-A1- 2007 126 384　　US-A1- 2013 278 189

• STM: "AN4776 Application note", 1 July 2019 (2019-07-01), XP055720240, Retrieved from the Internet <URL:https://www.st.com/resource/en/application_note/dm00236305-generalpurpose-timer-cookbook-for-stm32-microcontrollers-stmicroelectronics.pdf> [retrieved on 20200804]

## Description

FIELD OF THE INVENTION

The present invention relates to a control unit and an associated control method for controlling a motor driving a piston compressor pump in the low-speed range. In particular, the present invention relates to current control of a motor in the low-speed range in order to reduce electrical losses and increase a coefficient of performance of a refrigeration system including the motor and the piston compressor pump.

BACKGROUND OF THE INVENTION

Power optimization, including power loss minimization, has always been an issue in the field of power electronics. Within the field of power amplifiers for driving motors it has thus always been of interest to comply with a given load on the motor by feeding as little power as possible to the motor in order to increase the coefficient of performance of for example a refrigeration system including the motor and a piston compressor pump coupled thereto.

US 2013278189 A1 relates to an inverter control system comprising a voltage-source PWM inverter, a current sensor for detecting the input current of the inverter and a speed-control controller for controlling the rotation of a motor. The speed-control controller includes an analog sensorless circuit for a sensorless phase detection and an arithmetic unit, such as a CPU, wherein the arithmetic unit comprises a speed detector, a speed control section and a current control section.

US 5,592,058 relates, in general, to a system for conditioning air in a space by heating or cooling the air to change its temperature. A thermostat located within the space generates a two-state temperature signal having a cyclic parameter which corresponds to the temperature of the air in the space as it rises and falls. A compressor supplies refrigerant to a heat exchanger by means of which changes are made in the temperature of the air. A variable speed motor drives the compressor in response to a motor control signal. A controller responds to the temperature signal and senses the cyclic parameter of the temperature signal. The controller generates the motor control signal as a function of the sensed cyclic parameter whereby the motor control signal is provided to the motor to control the torque or speed of the motor.

The system of US 5,592,058 is disadvantageous due to its lack of power efficiency in relation to piston compressor pumps being operated at low rotational speeds.

It may be seen as an object of embodiments of the present invention to provide a control scheme that reduces electrical losses when a motor is driving a piston compressor pump.

It may be seen as a further object of embodiments of the present invention to provide a control unit and a control method that reduces electrical losses when a motor is driving a piston compressor pump at low rotational speeds.

DESCRIPTION OF THE INVENTION

The above-mentioned object is complied with by providing, in a first aspect, a control unit configured for controlling a motor driving a piston compressor pump below a selected rotational speed value, wherein the motor is driven by a frequency converter comprising a rectifier unit being operatively connected to an inverter unit via an intermediate DC circuit, and wherein the inverter unit provides a multi-phase AC power drive output to the motor, the control unit comprising

a) a motor speed calculation unit for calculating, in the digital domain, the rotational speed of the motor based on measured BEMF voltages from the motor,

b) a speed controller unit for calculating, in the digital domain, a stator current reference based on the calculated rotational speed and a rotational speed reference,

c) a D/A converter unit for converting the calculated stator current reference from the speed controller unit to an analog stator current reference, wherein the analog stator current reference sets an upper value for an associated phase stator current,

d) a comparator unit for comparing, in the analog domain, the analog stator current reference and a measured current in the intermediate DC circuit of the frequency converter, and providing a comparator unit output in response to this comparison, and

e) a PWM unit for providing PWM control signals to a phase commutation unit in response to the comparator unit output, said phase commutation unit providing a switch pattern to the inverter unit based on the measured BEMF voltages from the motor.

Thus, the control unit of the present invention is configured to operate the motor and the piston compressor pump below a selected rotational speed value, i.e. at low rotational speeds. The control scheme provided by the present invention is advantageous in that it reduces electrical losses. It has in this respect been estimated that the electrical losses may be reduced by approximately 5-8% due to reduced current levels in various power electronic devices, such as in the frequency converter and the motor. The rotational speeds at which the electrical losses may be reduced may be below 4000 rpm, such as below 3500 rpm, such as below 3000 rpm, such as below 2800 rpm, such as below 2600 rpm, such as below 2400 rpm, such as below 2200 rpm, such as below 2000 rpm, such as below 1800 rpm, such as between 1200 rpm and 1800 rpm.

The control unit of the present invention may be implemented as a separate and distinct control unit in the form of a microprocessor. Alternatively, the control unit may form part of a refrigeration system that also comprises the motor and the piston compressor pump. The motor speed calculation unit and the speed controller unit may be implemented as software mathematical algorithms in the form of a speed calculation algorithm and a controller algorithm.

The motor may be a brushless DC motor/synchronous permanent magnet machine. The rectifier unit of the frequency converter may be a passive one-phase rectifier bridge, whereas the inverter unit may be a controllable B6 inverter bridge configured to provide a three-phase AC power drive output for driving the motor and the piston compressor pump. The intermediate DC circuit may comprise a capacitor for smoothening the rectifier output voltage, and a shunt resistor for determining the current, $i_{dc}$, in the intermediate DC circuit via a voltage drop across said shunt resistor. The frequency converter is electrically connected to an AC voltage source, such as a 230 V/50 Hz or a 110 V/60 Hz AC voltage source.

The motor speed calculation unit of the control unit is thus configured for calculating, in the digital domain, the rotational speed of the motor based on measured BEMF voltages from the motor. As the motor speed calculation unit operates in the digital domain measured analog BEMF voltages at the motor terminals are passed through an A/D converter unit prior to being provided to the motor speed calculation unit.

The speed controller unit of the control unit is configured for calculating, in the digital domain, a stator current reference based on the calculated rotational speed and a rotational speed reference. The calculated stator current reference may be a 12 bit register value having a value in a range between 0 and 4095. The calculated stator current reference from the speed controller unit is converted to the analog domain, i.e. to an analog stator current reference, using a D/A converter, and the analog stator current reference is provided to comparator unit for comparing, in the analog domain, the analog stator current reference and a measured current in the intermediate DC circuit of the frequency converter. As it will be discussed in further details below the analog stator current reference sets an upper value for an associated phase stator current.

The measured current in the intermediate DC circuit may be determined from a voltage drop across a shunt resistor in the intermediate DC circuit in that the current is equal to the ratio between the voltage drop and the resistance of the shunt resistor. Prior to being provided to the comparator unit the current of the intermediate DC circuit may be passed through a current conditioning circuitry configured to amplify and filter the voltage across the shunt resistor before going into the comparator unit.

A PWM unit provides PWM control signals to a phase commutation unit in response to the comparator unit output. The PWM control signals from the PWM unit may comprise square-wave signals, wherein the duty-cycles of the square-wave signals may be based on the comparator unit output. The phase commutation unit provides the correct switch pattern to the six controllable switches of the B6 inverter bridge based upon the measured BEMF voltages. The switching instants are termed phase commutation angles and are thus based upon measured BEMF voltages from the motor. The PWM unit sets the high frequency switching frequency for the B6 inverter bridge, i.e. the high frequency PWM signal is super imposed on the switch pattern.

The control unit may further comprise an application controller unit for providing the rotational speed reference based on a user defined set point and a measured load-related feedback signal. The measured load-related feedback signal may represent a measured temperature within a refrigeration system comprising the motor and the piston compressor pump. The user defined set point may be a temperature reference at which the refrigeration system should be operated. The user defined set point, i.e. the temperature set point, may be within the range 2-20°C, such as within the range 2-10°C, such as within the range 2-8°C, such as approximately 5°C.

In a second aspect, the present invention relates to a refrigerator system comprising a control unit according to any of the preceding claims, a piston compressor pump, a motor driving the piston compressor pump, and a frequency converter comprising a rectifier unit being operatively connected to an inverter unit via an intermediate DC circuit, the inverter unit providing a three-phase AC power drive output to the motor and the piston compressor pump.

In terms of implementation the control unit and the frequency converter may be implemented as discussed in relation to the first aspect. Moreover, the motor driving the piston compressor pump may be a brushless DC motor/synchronous permanent magnet motor.

In a third aspect, the present invention relates to a method for controlling a motor driving a piston compressor pump below a selected rotational speed value, wherein the motor is driven by a frequency converter comprising a rectifier unit being operatively connected to an inverter unit via an intermediate DC circuit, and wherein the inverter unit provides a multi-phase AC power drive output to the motor and the piston compressor pump, the method comprising the step of

  a) calculating, in the digital domain, a rotational speed of the motor based on measured BEMF voltages from the motor,

  b) calculating, in the digital domain, a stator current reference based on the calculated rotational speed and a rotational speed reference,

c) converting the calculated stator current reference to an analog stator current reference, wherein the analog stator current reference sets an upper value for an associated phase stator current,

d) comparing, in the analog domain, the analog stator current reference and a measured current in the intermediate DC circuit of the frequency converter, and providing a PWM control signal in response to this comparison, and

e) controlling a switch pattern to the inverter unit based on measured BEMF voltages from the motor.

The method according to the third aspect of the present invention is advantageous in that it reduces electrical losses. As already addressed it has been estimated that the electrical losses may be reduced by approximately 5-8% due to reduced current levels in various power electronic devices, such as in the frequency converter and the motor. The rotational speeds at which the electrical losses may be reduced may be below 4000 rpm, such as below 3500 rpm, such as below 3000 rpm, such as below 2800 rpm, such as below 2600 rpm, such as below 2400 rpm, such as below 2200 rpm, such as below 2000 rpm, such as below 1800 rpm, such as between 1200 rpm and 1800 rpm.

Similar to the first aspect the motor may be a brushless DC motor/synchronous permanent magnet machine. The rectifier unit of the frequency converter may be a passive one-phase rectifier bridge, whereas the inverter unit may be a controllable B6 inverter bridge configured to provide a three-phase AC power drive output for driving the motor and the piston compressor pump. The switching frequency of the six controllable switches of the B6 inverter bridge may be within the range 5-20 kHz, such as within the range 5-15 kHz, such as within the range 5-10 kHz, such as within the range 6-8 kHz, such as within the range 6-7 kHz, such as approximately 6.6 kHz. The intermediate DC circuit may comprise a capacitor for smoothening the rectifier output voltage, and a shunt resistor for determining the current, $i_{dc}$, in the intermediate DC circuit via a voltage drop across said shunt resistor. The frequency converter is electrically connected to an AC voltage source, such as a 230 V/50 Hz or a 110 V/60 Hz AC voltage source.

A motor speed calculation unit of the control unit is configured for calculating, in the digital domain, the rotational speed of the motor based on measured BEMF voltages from the motor. However, as the motor speed calculation is performed in the digital domain measured analog BEMF voltages at the motor terminals are converted to the digital domain prior to being provided to the motor speed calculation unit.

A speed controller unit of the control unit is configured for calculating, in the digital domain, a stator current reference based on the calculated rotational speed and a rotational speed reference. The calculated stator current reference may be a 12 bit register value having a value in a range between 0 and 4095. The calculated stator current reference is converted to the analog domain, i.e. to an analog stator current reference, and the analog stator current reference is provided to comparator unit for comparing, in the analog domain, the analog stator current reference and a measured current in the intermediate DC circuit of the frequency converter. As previously mentioned the analog stator current reference sets an upper value for an associated phase stator current.

The measured current in the intermediate DC circuit may be determined from a voltage drop across a shunt resistor in the intermediate DC circuit in that the current is equal to the ratio between the voltage drop and the resistance of the shunt resistor. Prior to being provided to the comparator unit the current of the intermediate DC circuit may be passed through a current conditioning circuitry configured to amplify and filter the voltage across the shunt resistor before going into the comparator unit.

A PWM unit provides PWM control signals to a phase commutation unit in response to the comparison of the analog stator current reference and the measured current in the intermediate DC circuit, i.e. in response to a comparator unit output signal. The PWM control signals from the PWM unit may comprise square-wave signals, wherein the duty-cycles of the square-wave signals may be based on the comparator unit output. The phase commutation unit provides the correct switch pattern to the six controllable switches of the B6 inverter bridge based upon the measured BEMF voltages. The switching instants are termed phase commutation angles and are thus based upon measured BEMF voltages from the motor. The PWM unit sets the high frequency switching frequency for the B6 inverter bridge, i.e. the high frequency PWM signal is super imposed on the switch pattern.

The control unit may further comprise an application controller unit for providing the rotational speed reference based on a user defined set point and a measured load-related feedback signal. The measured load-related feedback signal may represent a measured temperature within a refrigeration system comprising the motor and the piston compressor pump. The user defined set point may be a temperature reference at which the refrigeration system should be operated. The user defined set point, i.e. the temperature set point, may be within the range 2-20°C, such as within the range 2-10°C, such as within the range 2-8°C, such as approximately 5°C.

In general the various aspects of the invention may be combined and coupled in any way possible within the scope of the invention. These and other aspects, features and/or advantages of the invention will be apparent from embodiments described hereinafter.

BRIEF DESCRIPTION OF THE DRAWINGS

The present invention will now be described in further details with reference to the accompanying figures, wherein

Fig. 1 shows a schematic block diagram of a variable speed drive according to the present invention,
Fig. 2 shows a detailed block diagram of a variable speed drive according to the present invention, and
Fig. 3 shows the timer counts, the current in the intermediate DC circuit of the frequency converter, a corresponding phase current, and the on-time, $T_{on}$, the off-time, $T_{off}$, the switching time, $T_{sw}$, and the duty-cycle, $T_{on}/T_{sw}$, of the controllable B6 inverter bridge.

While the invention is susceptible to various modifications and alternative forms specific embodiments have been shown by way of examples in the figures and will be described in details herein. It should be understood, however, that the invention is not intended to be limited to the particular forms disclosed. Rather, the invention is to cover all modifications falling within the scope of the invention as defined by the appended claims.

DETAILED DESCRIPTION OF THE INVENTION

In general, the present invention relates to a control unit configured to control a motor driving a piston compressor pump at low rotational speeds in order to reduce electrical losses. It has been estimated that the electrical losses may be reduced by approximately 5-8% due to reduced current levels. The control unit of the present invention comprises cascaded control loops in the form of an outer speed control loop and an inner peak current control loop. The control unit of the present invention is configured to control the rotational speed of the motor below for example 4000 rpm. The present invention further relates to an associated method for controlling a motor driving a piston compressor pump at low rotational speeds in order to reduce electrical losses by approximately 5-8% due to reduced current levels. The method of the present invention is particularly useful in relation to cyclic load torque distribution with low system moments of inertia, such as cyclic loads provided by piston compressor pumps.

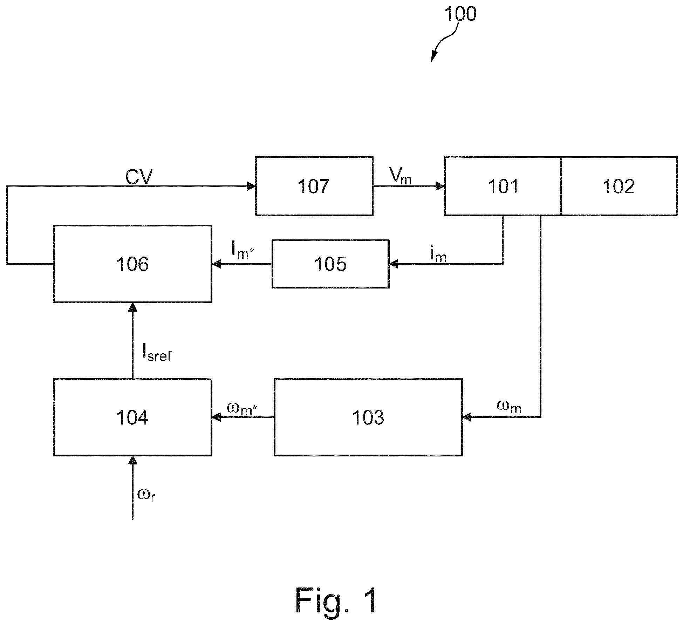

Referring now to Fig. 1 a schematic block diagram of the control scheme 100 of the present invention is depicted. As seen in Fig. 1 the control scheme 100 involves one cascaded control loop in the form for an outer speed control loop and an inner peak current control loop for controlling the motor 101 driving a piston compressor pump 102.

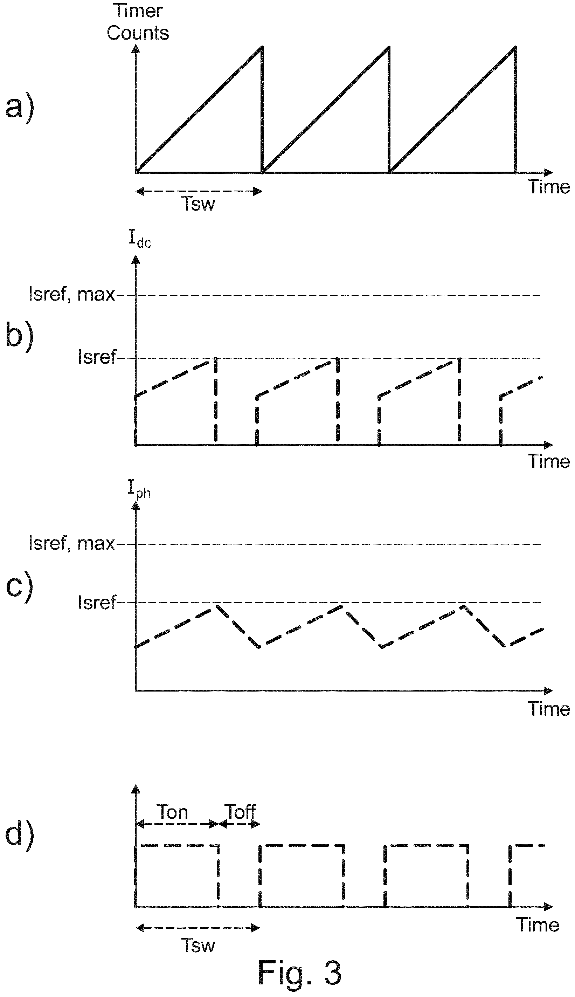

In the outer speed control loop the rotational speed, $\omega_{m^*}$, of the motor 101 is calculated by a motor speed calculation unit 103 from measured BEMF voltages from the motor, $\omega_m$. The measured BEMF voltages, which are proportional to the rotational speed of the motor 101, are measured for each phase of the motor 101. A speed controller unit 104 is provided for calculating a stator current reference, $I_{sref}$, based on the calculated rotational speed, $\omega_{m^*}$, and a rotational speed reference, $\omega_r$. As it will be discussed in relation to Fig. 3 the stator current reference, $I_{sref}$, sets an upper value for the stator current in the motor 101. The stator current reference, $I_{sref}$, is provided to a current control unit 106.

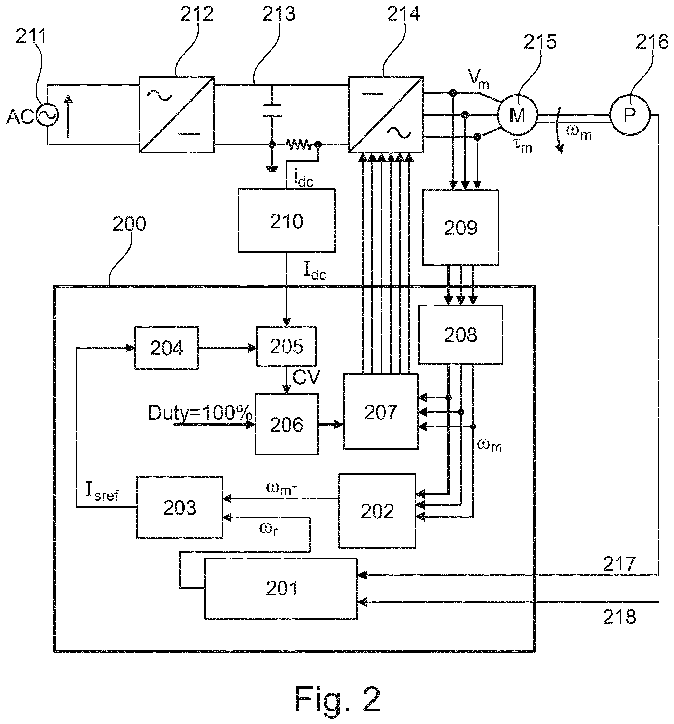

In the inner peak current control loop a representative for the motor stator current, $i_m$, is measured. This representative is, as it will be discussed in relation to Fig. 2, a current, $i_{dc}$, in an intermediate DC circuit of the power amplifier 107. As it will be discussed in details in relation to Fig. 2 the power amplifier 107 comprises a rectifier unit being operatively connected to an inverter unit via an intermediate DC circuit. As depicted in Fig. 1 the representative for the motor stator current, $i_m$, is provided to a current amplifier 105 which generates an actual value, $I_{m^*}$, of the stator current in the motor 101. A current controller 106 then generates a control signal, cv, to the power amplifier 107 based on the stator current reference, $I_{sref}$, and the actual value, $I_{m^*}$, of the stator current in the motor 101. The power amplifier 107 provides, in response to the control signal, cv, a three-phase AC voltage output, $v_m$, to drive the motor 101 and the piston compressor pump 102. The rotational speed of the motor 101 and the piston compressor pump 102 is varied by varying the frequency of the three-phase AC voltage output, $v_m$, from the power amplifier.

According to the present invention the inner peak current control loop is active when the motor 101 is operated at low rotational speeds, such as below 4000 rpm, such as below 3500 rpm, such as below 3000 rpm, such as below 2800 rpm, such as below 2600 rpm, such as below 2400 rpm, such as below 2200 rpm, such as below 2000 rpm, such as below 1800 rpm, such as between 1200 rpm and 1800 rpm. The fact that the inner peak current control loop is active when the motor 101 is operated at low rotational speeds is advantageous in that it reduces electrical losses and increases a coefficient of performance (COP) of a refrigeration system including the motor 101 and the piston compressor pump 102. In the present context the COP is defined as

$$COP = \frac{\dot{Q}_{evap}}{P_{in}}$$

where $\dot{Q}_{evap}$ is the cooling capacity of a refrigeration system measured in watts, and $P_{in}$ is the electrical input power to the refrigeration system. As seen, the smaller the electrical input power, $P_{in}$, the larger the COP. As already mentioned it has been estimated that the electrical losses may be reduced by approximately 5-8% due to reduced current levels.

Referring now to Fig. 2 a more detailed block diagram of the control unit 200 of the present invention is depicted. The control unit 200 is typically implemented as a microprocessor. In addition to the control unit 200 Fig. 2 shows an AC voltage source 211 feeding a frequency converter comprising a rectifier unit 212 being operatively connected to an inverter unit 214 via an intermediate DC circuit 213. The inverter unit 214 provides a three-phase AC power drive output to the motor 215 driving the piston compressor pump 216. The motor 215 and the piston compressor pump 216 typically form part of a refrigeration system (not shown). The rectifier unit 212 may be a passive one-phase rectifier bridge, whereas the inverter unit 214 typically involves a controllable B6 inverter bridge. The AC voltage source is typically the mains, i.e. 230 V at 50 Hz, or 115 V at 60 Hz. The motor 215 is typically a brushless DC motor/synchronous permanent magnet machine. The rotational speed of the motor 215, $\omega_m$, and the piston compressor pump 216 is varied by varying the frequency and amplitude of the three-phase AC voltage output from the inverter unit 214.

A current conditioning circuitry 210 receives information about the current, $i_{dc}$, in the intermediate DC circuit 213 of the frequency converter, and provides a conditioned current signal, $I_{dc}$, to a comparator 205 of the control unit 200. Moreover, an analog filtering circuitry 209 filters the measured BEMF voltages from the motor 215. The measured BEMF voltages are proportional to the rotational speed of the motor 215, and as depicted that Fig. 2, the BEMF voltages are measured for each phase of the motor 215. The analog filtering circuitry 209 provides filtered BEMF voltages to a digital filter unit 208 of the control unit 200. A feedback signal 217 is provided from the refrigeration system (not shown) to an application control unit 201 of the control unit 200. The feedback signal 217 typically represents a measured temperature within the refrigeration system. Moreover, a user set point 218 is provided to the application control unit 201. This user set point 218 typically involves a temperature reference at which the refrigeration system should be operated. The application control unit 201 provides, on the basis of the feedback signal 217 and the user set point 218, a rotational speed reference, $\omega_r$, to the speed controller unit 203 which also receives a calculated rotational speed, $\omega_{m*}$, from the motor speed calculation unit 202. As addressed in relation to Fig. 1 the motor speed calculation unit 202 receives a digital representation, $\omega_m$, of the measured BEMF voltages from the motor. The measured BEMF voltages, which are proportional to the rotational speed of the motor 215 and which are measured for each phase, are digitized in the digital filter unit 208 of the control unit 201 before being provided to the motor speed calculation unit 202. The digital representation, $\omega_m$, of the measured BEMF voltages are also provided to the phase commutation unit 207 that provides phase commutation angles to the inverter unit 214 based on the measured BEMF voltages.

As also addressed in relation to Fig. 1 the speed controller unit 203 of Fig. 2 calculates a stator current reference, $I_{sref}$, based on the calculated rotational speed, $\omega_{m*}$, and the rotational speed reference, $\omega_r$, provided by the application controller unit 201. The stator current reference, $I_{sref}$, from the speed controller unit 203 is a 12 bit register value having a value in a range between 0 and 4095, and it sets an upper value for the stator current in the motor 215. A D/A converter unit 204 converts the calculated stator current reference, $I_{sref}$, from the speed controller unit 203 to an analog stator current reference which is provided to a comparator unit 205. The comparator unit 205 compares, in the analog domain, the analog stator current reference from the D/A converter unit 204 and the current, $I_{dc}$, in the intermediate DC circuit 213 of the frequency converter, and the comparator unit 205 provides an output in response to this comparison.

When the current $I_{dc}$ is equal to the stator current reference $I_{sref}$ the comparator unit 205 output signal, cv, goes from low to high. The output signal, cv, from comparator unit 205 is provided to the PWM unit 206 which reduces the duty cycle "Duty" below a predetermined value, e.g. 100%. In the next PWM period the duty cycle "Duty" is reset to the predetermined value e.g. 100%. The output from the PWM unit 206 is feed to the phase commutation unit 207 setting a high frequency PWM signal to the B6 inverter bridge 214. The phase commutation unit 207 sets the correct switch pattern to the six controllable switches of the B6 inverter bridge 214 based upon the measured BEMF voltages. The high frequency PWM signal is super imposed on the switch pattern.

Turning now to Fig. 3 the current, $I_{dc}$, in the intermediate DC circuit 213 of the frequency converter and a corresponding phase current, $I_{ph}$, in the motor 215 are depicted in Figs. 3b and 3c, respectively. Moreover, the duty-cycle, $T_{on}/T_{sw}$, and the switching period, $T_{sw}$, of the controllable B6 inverter bridge are depicted in Fig. 3d.

Fig. 3a shows the sawtooth timer signal of a PWM timer for a so-called edge-aligned PWM mode. As seen in Fig. 3a the timer counts from zero to its maximum value and then resets to zero when the maximum value has been reached. The switching frequency $f_{sw} = 1/T_{sw}$, where $T_{sw}$ is the switching period, of the inverter unit 214 is constant and typically within the range 5-20 kHz, such as within the range 5-15 kHz, such as within the range 5-10 kHz, such as within the range 6-8 kHz, such as within the range 6-7 kHz, such as approximately 6.6 kHz.

In Fig. 3b the current, $I_{dc}$, in the intermediate DC circuit 213 of the frequency converter is depicted as a function of time. It is seen that $I_{dc}$ reaches its maximum value $I_{sref}$ at the end of the on-time $T_{on}$, cf. Fig. 3d. After reaching its maximum value the current $I_{dc}$ drops to zero until the start of the next switching period. The stator current reference, $I_{sref}$, can be set at any value between zero and $I_{sref, max}$ which in case of a 12 bit register corresponds to values in the range from 0 to 4095. In Fig. 3c a corresponding phase current, $I_{ph}$, in the motor 215 are depicted. The phase current, $I_{ph}$, also reaches its maximum value $I_{sref}$ at the end of the duty-cycle, cf. Fig.

3d. After reaching its maximum value the phase current decreases until the start of the next switching period where it starts increasing again.

## ABSTRACT

The present invention relates to a control unit configured for controlling a motor driving a piston compressor pump below a selected rotational speed value. The motor is driven by a frequency converter comprising a rectifier unit being operatively connected to an inverter unit via an intermediate DC circuit. According to the present invention the control unit comprises a motor speed calculation unit for calculating, in the digital domain, the rotational speed of the motor based on measured BEMF voltages from the motor, a speed controller unit for calculating, in the digital domain, a stator current reference based on the calculated rotational speed and a rotational speed reference, a D/A converter unit for converting the calculated stator current reference from the speed controller unit to an analog stator current reference which sets an upper value for an associated phase stator current, a comparator unit for comparing, in the analog domain, the analog stator current reference and a measured current in the intermediate DC circuit of the frequency converter, and providing a comparator unit output in response to this comparison, and a PWM unit for providing PWM control signals to a phase commutation unit in response to the comparator unit output, said phase commutation unit providing a switch pattern to the inverter unit based on the measured BEMF voltages from the motor. The present invention further relates to an associated method.

## Claims

1. A control unit (200) configured for controlling a motor (215) driving a piston compressor pump (216) below a selected rotational speed value, wherein the motor (215) is driven by a frequency converter comprising a rectifier unit (212) being operatively connected to an inverter unit (214) via an intermediate DC circuit (213), and wherein the inverter unit (214) provides a multi-phase AC power drive output to the motor (215), the control unit (200) comprising

   a) a motor speed calculation unit for calculating, in the digital domain, the rotational speed of the motor based on measured BEMF voltages from the motor,
   b) a speed controller unit for calculating, in the digital domain, a stator current reference based on the calculated rotational speed and a rotational speed reference,
   c) a D/A converter unit for converting the calculated stator current reference from the speed controller unit to an analog stator current reference, wherein the analog stator current reference sets an upper value for the stator current,
   d) a comparator unit for comparing, in the analog domain, the analog stator current reference and a measured current in the intermediate DC circuit of the frequency converter, and providing a comparator unit output in response to this comparison, and
   e) a PWM unit for providing PWM control signals to a phase commutation unit in response to the comparator unit output, said phase commutation unit providing a switch pattern to the inverter unit based on the measured BEMF voltages from the motor.

2. A control unit according to claim 1, wherein the PWM control signals from the PWM unit comprise square-wave signals, and wherein the duty-cycles of the square-wave signals are based on the comparator unit output.

3. A control unit according to claims 1 or 2, wherein the calculated stator current reference from the speed controller unit is a 12 bit register value having a value in a range between 0 and 4095.

4. A control unit according to any of the preceding claims, further comprising an A/D converter unit for converting the measured BEMF voltages from the motor to digital BEMF signals, said digital BEMF signals being provided to the phase commutation unit and the motor speed calculation unit.

5. A control unit according to any of the preceding claims, wherein the inverter unit comprises a B6 inverter bridge, and wherein the inverter unit is configured to provide a three-phase AC power drive output for driving the motor and the piston compressor pump.

6. A control unit according to any of the preceding claims, further comprising an application controller unit for providing the rotational speed reference based on a user defined set point and a measured load related feedback signal.

7. A control unit according to any of the preceding claims, wherein the selected rotational speed value of the motor is below 4000 rpm, such as below 3500 rpm, such as below 3000 rpm, such as below 2800 rpm, such as below 2600 rpm, such as below 2400 rpm, such as below 2200 rpm, such as below 2000 rpm, such as below 1800 rpm, such as between 1200 rpm and 1800 rpm.

8. A refrigerator system comprising a control unit according to any of the preceding claims, a piston compressor pump, a motor driving the piston compressor pump, and a frequency converter comprising a rectifier unit being operatively connected to an inverter unit via an intermediate DC circuit, the inverter unit providing a three-phase AC power drive output to the motor and the piston compressor pump.

9. A refrigerator system according to claim 8, wherein the motor driving the piston compressor pump is a brushless DC motor/synchronous permanent magnet motor.

10. A method for controlling a motor (215) driving a piston compressor pump (216) below a selected rotational speed value, wherein the motor (215) is driven by a frequency converter comprising a rectifier unit (212) being operatively connected to an inverter unit (214) via an intermediate DC circuit (213), and wherein the inverter unit (214) provides a multi-phase AC power drive output to the motor (215) and the piston compressor pump (216) the method comprising the step of

    a) calculating, in the digital domain, a rotational speed of the motor based on measured BEMF voltages from the motor,
    b) calculating, in the digital domain, a stator current reference based on the calculated rotational speed and a rotational speed reference,
    c) converting the calculated stator current reference to an analog stator current reference, wherein the analog stator current reference sets an upper value for the stator current,
    d) comparing, in the analog domain, the analog stator current reference and a measured current in the intermediate DC circuit of the frequency converter, and providing a PWM control signal in response to this comparison, and
    e) controlling a switch pattern to the inverter unit based on measured BEMF voltages from the motor.

11. A method according to claim 10, wherein the selected rotational speed value is below 4000 rpm, such as below 3500 rpm, such as below 3000 rpm, such as below 2800 rpm, such as below 2600 rpm, such as below 2400 rpm, such as below 2200 rpm, such as below 2000 rpm, such as below 1800 rpm, such as between 1200 rpm and 1800 rpm.

12. A method according to claim 10 or 11, wherein the PWM control signals comprise square-wave signals, and wherein the duty-cycles of the square-wave signals are based on the comparison of the analog stator current reference and the measured current in the intermediate DC circuit of the frequency converter.

13. A method according to any of claims 10-12, wherein the calculated stator current reference from the speed controller unit is a 12 bit register value having a value in a range between 0 and 4095.

14. A method according to any of claims 10-13, wherein the inverter unit comprises a B6 inverter bridge, and wherein the inverter unit is configured to provide a three-phase AC power drive output for driving the motor and the piston compressor pump, and wherein the switching frequency of the six controllable switches of the B6 inverter bridge is within the range 5-20 kHz, such as within the range 5-15 kHz, such as within the range 5-10 kHz, such as within the range 6-8 kHz, such as within the range 6-7 kHz, such as approximately 6.6 kHz.

**Patentansprüche**

1. Steuereinheit (200), welche dafür eingerichtet ist, einen Motor (215), welcher eine Kolbenkompressorpumpe (216) antreibt, derart zu steuern, dass er unter einem gewählten Drehzahlwert bleibt,

    wobei der Motor (215) von einem Frequenzumformer angetrieben wird, welcher eine Gleichrichtereinheit (212), welche über einen Gleichspannungszwischenkreis (213) mit einer Wechselrichtereinheit (214) wirkverbunden ist, aufweist, und
    wobei die Wechselrichtereinheit (214) dem Motor (215) eine Mehrphasenwechselspannungs-Antriebsleistung bereitstellt,
    die Steuereinheit (200) aufweisend

        a) eine Motorgeschwindigkeitsberechnungseinheit zum Berechnen, auf digitaler Ebene, der Drehzahl des Motors basierend auf gemessenen Gegen-EMK-Spannungen des Motors,
        b) eine Geschwindigkeitssteuerungseinheit zum Berechnen, auf digitaler Ebene, einer Statorstromreferenz basierend auf der berechneten Drehzahl und einer Drehzahlreferenz,
        c) eine D/A-Wandlereinheit zum Umwandeln der berechneten Statorstromreferenz von der Geschwindigkeitssteuerungseinheit in eine analoge Statorstromreferenz, wobei die analoge Statorstromreferenz einen oberen Wert für den Statorstrom festlegt,
        d) eine Komparatoreinheit zum Vergleichen, auf analoger Ebene, der analogen Statorstromreferenz mit einem gemessenen Strom im Gleichspannungszwischenkreis des Frequenzumformers, und zum Bereitstellen einer Komparatoreinheitsausgangs als Reaktion auf diesen Vergleich, und

e) eine PWM-Einheit zum Bereitstellen von PWM-Steuersignalen für eine Phasenkommutierungseinheit als Reaktion auf den Komparatoreinheitsausgang, wobei die Phasenkommutierungseinheit der Wechselrichtereinheit basierend auf den gemessenen Gegen-EMK-Spannungen des Motors ein Schaltmuster bereitstellt.

2. Steuereinheit nach Anspruch 1, wobei die PWM-Steuersignale von der PWM-Einheit Rechtecksignale aufweisen, und wobei die Arbeitszyklen der Rechtecksignale auf dem Komparatoreinheitsausgang basieren.

3. Steuereinheit nach Anspruch 1 oder 2, wobei die berechnete Statorstromreferenz von der Geschwindigkeitssteuerungseinheit ein 12-Bit-Registerwert ist, welcher einen Wert im Bereich von zwischen 0 und 4095 aufweist.

4. Steuereinheit nach einem der vorstehenden Ansprüche, ferner aufweisend eine A/D-Wandlereinheit zum Umwandeln der gemessenen Gegen-EMK-Spannungen vom Motor in digitale Gegen-EMK-Signale, wobei diese digitalen Gegen-EMK-Signale der Phasenkommutierungseinheit und der Motorgeschwindigkeitsberechnungseinheit bereitgestellt werden.

5. Steuereinheit nach einem der vorstehenden Ansprüche, wobei die Wechselrichtereinheit eine B6-Wechselrichterbrücke aufweist, und wobei die Wechselrichtereinheit dafür eingerichtet ist, eine dreiphasige Wechselstromantriebsleistung zum Antreiben des Motors und der Kolbenkompressorpumpe bereitzustellen.

6. Steuereinheit nach einem der vorstehenden Ansprüche, ferner aufweisend eine Anwendungssteuerungseinheit zum Bereitstellen der Drehzahlreferenz basierend auf einem benutzerdefinierten Sollwert und einem gemessenen lastbezogenen Rückmeldesignal.

7. Steuereinheit nach einem der vorstehenden Ansprüche, wobei der gewählte Drehzahlwert des Motors unter 4000 U/min, wie zum Beispiel unter 3500 U/min, wie zum Beispiel unter 3000 U/min, wie zum Beispiel unter 2800 U/min, wie zum Beispiel unter 2600 U/min, wie zum Beispiel unter 2400 U/min, wie zum Beispiel unter 2200 U/min, wie zum Beispiel 2000 U/min, wie zum Beispiel unter 1800 U/min, wie zum Beispiel zwischen 1200 U/min und 1800 U/min, liegt.

8. Kühlsystem aufweisend eine Steuereinheit nach einem der vorstehenden Ansprüche, eine Kolbenkompressorpumpe, einen Motor, welcher die Kolbenkompressorpumpe antreibt, und einen Frequenzumformer aufweisend eine Gleichrichtereinheit, welche über einen Gleichspannungszwischenkreis mit einer Wechselrichtereinheit wirkverbunden ist, wobei die Wechselrichtereinheit dem Motor und der Kolbenkompressorpumpe eine dreiphasige Wechselstromantriebsleistung bereitstellt.

9. Kühlsystem nach Anspruch 8, wobei der Motor, welcher die Kolbenkompressorpumpe antreibt, ein bürstenloser Gleichstrommotor/Synchro-Permanentmagnetmotor ist.

10. Verfahren zum Steuern eines Motors (215), welcher eine Kolbenkompressorpumpe (216) antreibt, sodass er unter einem gewählten Drehzahlwert bleibt,

wobei der Motor (215) von einem Frequenzumformer angetrieben wird, welcher eine Gleichrichtereinheit (212), welche über einen Gleichspannungszwischenkreis (213) mit einer Wechselrichtereinheit (214) wirkverbunden ist, aufweist, und wobei die Wechselrichtereinheit (214) dem Motor (215) und der Kolbenkompressorpumpe (216) eine Mehrphasenwechselspannungs-Antriebsleistung bereitstellt, das Verfahren umfassend die Schritte

a) Berechnen, auf digitaler Ebene, einer Drehzahl des Motors basierend auf gemessenen Gegen-EMK-Spannungen des Motors,
b) Berechnen, auf digitaler Ebene, einer Statorstromreferenz basierend auf der berechneten Drehzahl und einer Drehzahlreferenz,
c) Umwandeln der berechneten Statorstromreferenz in eine analoge Statorstromreferenz, wobei die analoge Statorstromreferenz einen oberen Wert für den Statorstrom festlegt,
d) Vergleichen, auf analoger Ebene, der analogen Statorstromreferenz mit einem gemessenen Strom im Gleichspannungszwischenkreis des Frequenzumformers, und Bereitstellen eines PWM-Steuersignals als Reaktion auf diesen Vergleich, und
e) Steuern eines Schaltmusters zur Wechselrichtereinheit basierend auf den gemessenen Gegen-EMK-Spannungen des Motors.

11. Verfahren nach Anspruch 10, wobei der gewählte Drehzahlwert des Motors unter 4000 U/min, wie zum Beispiel unter 3500 U/min, wie zum Beispiel unter 3000 U/min, wie zum Beispiel unter 2800 U/min, wie zum Beispiel unter 2600 U/min, wie zum Beispiel unter 2400 U/min, wie zum Beispiel unter 2200 U/min, wie zum Beispiel 2000 U/min, wie zum Beispiel unter 1800 U/min, wie zum Beispiel zwischen 1200 U/min und 1800 U/min, liegt.

**12.** Verfahren nach Anspruch 10 oder 11, wobei die PWM-Steuersignale Rechtecksignale aufweisen, und wobei die Arbeitszyklen der Rechtecksignale auf dem Vergleich der analogen Statorstromreferenz mit dem gemessenen Strom im Gleichspannungszwischenkreis des Frequenzumformers basieren.

**13.** Verfahren nach einem der Ansprüche 10 - 12, wobei die berechnete Statorstromreferenz von der Geschwindigkeitssteuerungseinheit ein 12-Bit-Registerwert ist, welcher einen Wert im Bereich von zwischen 0 und 4095 aufweist.

**14.** Verfahren nach einem der Ansprüche 10 - 13, wobei die Wechselrichtereinheit eine B6-Wechselrichterbrücke aufweist, und wobei die Wechselrichtereinheit dafür eingerichtet ist, eine dreiphasige Wechselstromantriebsleistung zum Antreiben des Motors und der Kolbenkompressorpumpe bereitzustellen, und wobei die Schaltfrequenz der sechs steuerbaren Schalter der B6-Wechselrichterbrücke im Bereich von 5 - 20 kHz, wie zum Beispiel im Bereich von 5 - 15 kHz, wie zum Beispiel im Bereich von 5 - 10 kHz, wie zum Beispiel im Bereich von 6 - 8 kHz, wie zum Beispiel im Bereich von 6 - 7 kHz, wie zum Beispiel bei ungefähr 6,6 kHz, liegt.

## Revendications

**1.** Unité de commande (200) configurée pour commander un moteur (215) entraînant une pompe à compresseur à piston (216) en dessous d'une valeur de vitesse de rotation sélectionnée,

dans laquelle le moteur (215) est entraîné par un convertisseur de fréquence comprenant une unité redresseuse (212) connectée fonctionnellement à une unité d'onduleur (214) via un circuit CC intermédiaire (213), et unité d'onduleur (214) fournit une sortie d'entraînement en courant alternatif multiphasé au moteur (215), l'unité de commande (200) comprenant

a) une unité de calcul de la vitesse du moteur pour calculer, dans le domaine numérique, la vitesse de rotation du moteur en fonction des tensions FCEM mesurées provenant du moteur,
b) un régulateur de vitesse pour calculer, dans le domaine numérique, une référence de courant statorique basée sur la vitesse de rotation calculée et une référence de vitesse de rotation,
c) une unité de conversion N/A pour convertir la référence de courant statorique calculée de l'unité de régulateur de vitesse en une référence de courant statorique analogique, la référence de courant statorique analogique fixant une valeur supérieure pour le courant statorique,
d) une unité de comparaison pour comparer, dans le domaine analogique, la référence de courant statorique analogique et un courant mesuré dans le circuit CC intermédiaire du convertisseur de fréquence, et fournir une sortie d'unité de comparaison en réponse à cette comparaison, et
e) une unité PWM pour fournir des signaux de commande PWM à une unité de commutation de phase en réponse à la sortie de l'unité comparateur, ladite unité de commutation de phase fournissant un modèle de commutation à l'unité d'onduleur sur la base des tensions FCEM mesurées provenant du moteur.

**2.** Unité de commande selon la revendication 1, dans laquelle les signaux de commande PWM provenant de l'unité PWM comprennent des signaux d'onde carrée, et les cycles de service des signaux d'onde carrée sont basés sur la sortie de l'unité de comparateur.

**3.** Unité de commande selon la revendication 1 ou 2, dans laquelle la référence de courant statorique calculée provenant de l'unité de commande de vitesse est une valeur de registre de 12 bits ayant une valeur dans une plage comprise entre 0 et 4095.

**4.** Unité de commande selon l'une quelconque des revendications précédentes, comprenant en outre une unité de conversion A/N pour convertir les tensions FCEM mesurées provenant du moteur en signaux numériques FCEM, lesdits signaux numériques de FCEM étant fournis à l'unité de commutation de phase et à l'unité de calcul de vitesse du moteur.

**5.** Unité de commande selon l'une quelconque des revendications précédentes, dans laquelle l'unité d'onduleur comprend un pont d'onduleur B6, et l'unité d'onduleur est configurée pour fournir une sortie d'entraînement à courant alternatif triphasé pour entraîner le moteur et la pompe du compresseur à piston.

**6.** Unité de commande selon l'une quelconque des revendications précédentes, comprenant en outre une unité de commande d'application pour fournir la référence de vitesse de rotation sur la base d'un point de consigne défini par l'utilisateur et d'un signal de rétroaction relatif à la charge mesurée.

**7.** Unité de commande selon l'une quelconque des revendications précédentes, dans laquelle la valeur de vitesse de rotation sélectionnée du moteur est inférieure à 4000 tr/min, telle qu'inférieure à 3500 tr/min, telle qu'inférieure à 3000 tr/min, telle qu'inférieure à 2800 tr/min, telle qu'inférieure à 2600 tr/min, telle qu'inférieure à 2400 tr/min, telle qu'inférieure à 2200 tr/min, telle qu'inférieure à 2000 tr/min, telle qu'inférieure à 1800 tr/min, telle qu'entre 1200 tr/min et 1800 tr/min.

**8.** Système de réfrigération comprenant une unité de commande selon l'une quelconque des revendications précédentes, une pompe à compresseur à piston, un moteur entraînant la pompe à compresseur à piston, et un convertisseur de fréquence comprenant une unité redresseuse connectée fonctionnellement à une unité d'onduleur par l'intermédiaire d'un circuit CC intermédiaire, l'unité d'onduleur fournissant une sortie d'entraînement en courant alternatif triphasé au moteur et à la pompe à compresseur à piston.

**9.** Système de réfrigérateur selon la revendication 8, dans lequel le moteur entraînant la pompe de compresseur à piston est un moteur à courant continu sans balai/moteur à aimant permanent synchrone.

**10.** Procédé de commande d'un moteur (215) entraînant une pompe de compresseur à piston (216) en dessous d'une valeur de vitesse de rotation sélectionnée,

dans lequel le moteur (215) est entraîné par un convertisseur de fréquence comprenant une unité redresseuse (212) reliée fonctionnellement à une unité d'onduleur (214) par l'intermédiaire d'un circuit CC intermédiaire (213), et l'unité d'onduleur (214) fournit une sortie d'entraînement de puissance CA multiphasée au moteur (215) et à la pompe de compresseur à piston (216).

le procédé comprend les étapes consistant à

a) calculer, dans le domaine numérique, une vitesse de rotation du moteur en fonction des tensions FCEM mesurées provenant du moteur,
b) calculer, dans le domaine numérique, une référence de courant statorique basée sur la vitesse de rotation calculée et une référence de vitesse de rotation,
c) convertir la référence de courant statorique calculée en une référence de courant statorique analogique, la référence de courant statorique analogique définissant une valeur supérieure pour le courant statorique,
d) comparer, dans le domaine analogique, la référence de courant statorique analogique et un courant mesuré dans le circuit CC intermédiaire du convertisseur de fréquence, et fournir un signal de commande PWM en réponse à cette comparaison, et
e) commander un schéma de commutation vers l'onduleur en fonction des tensions FCEM mesurées provenant du moteur.

**11.** Procédé selon la revendication 10, dans lequel la valeur de vitesse de rotation sélectionnée est inférieure à 4000 tr/min, telle qu'inférieure à 3500 tr/min, telle qu'inférieure à 3000 tr/min, telle qu'inférieure à 2800 tr/min, telle qu'inférieure à 2600 tr/min, telle qu'inférieure à 2400 tr/min, telle qu'inférieure à 2200 tr/min, telle qu'inférieure à 2000 tr/min, telle qu'inférieure à 1800 tr/min, telle qu'entre 1200 tr/min et 1800 tr/min.

**12.** Procédé selon la revendication 10 ou 11, dans lequel les signaux de commande PWM comprennent des signaux d'onde carrée, et dans lequel les cycles d'utilisation des signaux rectangulaires sont basés sur la comparaison de la référence de courant de stator analogique et du courant mesuré dans le circuit CC intermédiaire du convertisseur de fréquence.

**13.** Procédé selon l'une quelconque des revendications 10 à 12, dans lequel la référence de courant statorique calculée provenant de l'unité de commande de vitesse est une valeur de registre de 12 bits ayant une valeur dans une plage comprise entre 0 et 4095.

**14.** Procédé selon l'une quelconque des revendications 10 à 13, dans lequel l'unité d'onduleur comprend un pont d'onduleur B6, et l'unité d'onduleur est configurée pour fournir une sortie d'entraînement en courant alternatif triphasé pour entraîner le moteur et la pompe de compresseur à piston, et la fréquence de commutation des six commutateurs commandables du pont inverseur B6 est dans la plage de 5 à 20 kHz, par exemple dans la plage de 5 à 15 kHz, par exemple dans la plage de 5 à 10 kHz, par exemple dans la plage de 6 à 8 kHz, par exemple dans la plage de 6 à 7 kHz, par exemple approximativement de 6,6 kHz.

100

Fig. 1

Fig. 2

a)

Timer Counts

Tsw

b)

$I_{dc}$

Isref, max

Isref

Time

c)

$I_{ph}$

Isref, max

Isref

Time

d)

Ton    Toff

Tsw

Time

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013278189 A1

- US 5592058 A